# EUROPÄISCHE PATENTSCHRIFT

(11) **EP 2 011 669 B1**
(45) Veröffentlichungstag und Bekanntmachung des Hinweises auf die Patenterteilung: **21.12.2011**
(21) Anmeldenummer: 08012096.7
(22) Anmeldetag: 04.07.2008
(51) Int. Cl.: B60B 33/00

(54) **Rolle, insbesondere Möbelrolle**
Roller, in particular furniture roller
Rouleau, en particulier rouleau de meuble

(30) Priorität: 04.07.2007 DE 102007031172
(43) Veröffentlichungstag der Anmeldung: 07.01.2009
(73) Patentinhaber: Maier Immobilien GmbH & Co. KG, 75382 Althengstett (DE)
(72) Erfinder: Maier, Charsten, 75392 Deckenpfronn (DE); Maier, Hans-Christian, 71116 Gärtringen (DE)
(74) Vertreter: Steimle, Josef

(56) Entgegenhaltungen:
- WO-A-2005/118314
- WO-A-2006/114131
- GB-A- 2 382 981
- US-A- 2 973 546
- US-A- 2 986 767
- US-A- 3 869 105
- US-A- 5 355 550

## Beschreibung

Die Erfindung betrifft eine Rolle, insbesondere eine Möbelrolle, mit den im Oberbegriff des Patentanspruchs 1 angegebenen Merkmalen.

Solche Rollen sind z.B. aus der WO 2005/118314 A1 bekannt und werden z.B. an der Unterseite von Objekten, wie z.B. Geräten, Apparaten, Gestellen, Einrichtungsgegenständen usw. angebaut, um sie fahrbar zu machen. Als so genannte Möbelrollen haben sie überwiegend zwei Laufräder, die beidseits eines ggf. nur gehäuseähnlich ausgebildeten, z.B. aus Kunststoff bestehenden Rollen-Lagerungsteils auf einer daran gelagerten Laufradachse endseitig gelagert sind. Sie finden z.B. an Polstermöbeln und den Enden der Beine von Tischen und Stühlen, hier insbesondere an den Enden der Arme metallener, hölzerner oder auch aus Kunststoff bestehender Fußkreuze von Schreibtischdrehstühlen Verwendung.

Die Befestigung bekannter Rollen am jeweiligen Objekt erfolgt z.B. mittels zylindrischer Befestigungsstifte aus Stahl mit abgeflachten Enden. Hierzu ist z.B. an den oft z.B. nur von einer zentrisch ausgebildeten, von einer Abdeckung überdeckten Art Scheibe gebildeten, aus Kunststoff bestehenden Rollen-Lagerungsteilen in einem horizontalen Abstand von der Laufradachse, wegen eines ansatzartigen Überstandes über die Abdeckung auch "Rollenhals" genannte hohlzylindrische, hülsenartig unten mit einem flachen Boden endende, mit der Aufnahmeöffnung mehr oder weniger über die Abdeckung nach oben überstehende Rollen-Stiftaufnahme als Gleitlager für einen unteren Teil des Befestigungsstiftes, nachfolgend kurz unterer Stiftteil genannt, ausgebildet. Dieser wird darin nach dem - maschinellen - Eindrücken durch eine kostengünstig durch Kaltumformung an ihm ausgebildete flache Nut, in die beim Eindrücken eine an der Innenwandung der Rollen-Stiftaufnahme ausgebildete Wulst oder auch mehrere Warzen eingreifen, um seine Längsachse drehbar gehalten.

Die Kombination einer solchen Stiftaufnahme aus Kunststoff mit einem Befestigungsstift aus Stahl ermöglicht eine hohe Maßhaltigkeit der Stiftlagerung, d. h. so gut wie ohne Lagerungsspiel bei leichter Drehbarkeit des Stiftes, und dies bei zudem günstigen Gestehungskosten für diese Lagerung.

Ganz anders dagegen bei der Lagerung von Stahl-Befestigungsstiften in an Rollen-Lagerungsteilen aus Metall, wie z. B. Zinkdruckguss, ausgebildeten Stiftaufnahmen. Um den Stift darin zu halten, wird ein Sprengring benutzt. Er ist am Stiftteil in einer entsprechend tieferen Nut angeordnet, da an der Innenwandung einer metallenen Stiftaufnahme fertigungstechnisch keine in eine Nut am Stift eingreifende Arretierungs-Wülste oder -Warzen ausbildbar sind.

Die Ausbildung einer solchen Sprengringnut erfordert jedoch zum einen eine zu einem hohen Werkzeugverschleiß führenden Einstech-Bearbeitung des durch Kaltverfestigung harten Stiftes, und andererseits eine kostenaufwändig manuelle Platzierung des Sprengrings in dieser Nut. Dabei führt ein solcher Sprengring zu einem unvermeidlichen Lagerspiel des Befestigungsstiftes in der Stiftaufnahme und damit zu einer verschleißfördernden ungenauen Führung beim Drehen in ihr, was auch das Bewegen des damit ausgestatteten Objekts ungünstig beeinflusst.

Aus diesen Gründen stehen hier Rollen mit Lagerungsteilen aus Kunststoff oder auch aus Metall, bei denen dann jedoch in z. B. einer entsprechenden Ausnehmung eine Kunststoffhülse als Stiftaufnahme angeordnet ist, im Vordergrund.

Der unten vom Rollen-Lagerungsteil gehaltene Befestigungsstift wird oben in Abhängigkeit des Werkstoffs des jeweiligen Objektteils, von dem sein oberer Stiftteil gehalten werden soll, daran befestigt. Bei Objektteilen aus Metall, wie z. B. Drehstuhl-Fußkreuzen, sind auch, wie schon am Rollen-Lagerungsteil, z. B. hohlzylindrische, hülsenartig mit einem flachen Boden oben endende Objekt-Stiftaufnahmen ausgebildet. Darin wird der obere Stiftteil eingeschlagen und durch einen Sprengring, um seine Längsachse drehbar oder auch nicht drehbar, gehalten.

Mit entsprechenden hülsenartigen, ggf. glasfaserverstärkten Ausgestaltungen werden die oberen Stiftteile auch an Objektteilen aus Kunststoff, wie z. B. wiederum Drehstuhl-Fußkreuzen, gehalten.

Bei Objekten mit Holzteilen, wie z. B. Zargen bei Polstermöbeln, werden zur oberen Stiftteil-Befestigung, wie z. B. - aus z. B. Handhabungsgründen - überwiegend in der Polstermöbel-industrie, lose, in entsprechend dimensionierte Sackbohrungen in den Holzteilen einzuschlagende Hülsen aus Zinkdruckguss, seltener auch aus Kunststoff, mit einem flanschartig verbreiterten Öffnungsrand mit Nagellöchern für eine Nagelbefestigung verwendet. Bei ersteren werden die oberen Stiftteile ebenfalls kostenaufwändig durch einen in eine Stiftnut eingesetzten Sprengring gehalten. Kunststoff-Einsteckhülsen mit rundem oder eckigem Querschnitt werden auch zur Befestigung der oberen Stiftteile an z. B. den Enden der von Metallrohren mit rundem oder eckigem Querschnitt gebildeten Tisch- und Stuhlbeinen verwendet.

Damit z. B. die in die hülsenförmigen Objekt-Stiftaufnahmen von metallenen Fußkreuzen einzuschlagenden oberen Stiftteile gleich weit über deren Öffnungsrand nach unten überstehen, um so ein Wackeln des Drehstuhls zu verhindern, ist an den dafür vorgesehenen Befestigungsstiften in einem mittleren Schaftabschnitt eine schmale, seitwärts ringartig abstehende Materialverdickung, also eine Art zylindrischer Bund, als "Höhenanschlag" ausgebildet. Sie liegt bestimmungsgemäß mit ihrer Oberseite am Öffnungsrand dieser Stiftaufnahmen an, nicht aber mit ihrer Unterseite auf dem Öffnungsrand des Rollenhalses auf, wodurch ansonsten die vertikalen Schwenkbewegungen der Rollen behindert werden würden.

Daneben hat ein solcher "Höhenanschlag"-Bund auch eine fertigungstechnische Bedeutung: Er erleichtert die Handhabung der Befestigungsstifte bei ihrer Herstellung und Montage, z. B. beim Kaltumformen und Vernieten an einer Halteplatte oder zur Ausbildung eines Vier- oder Sechskants an seinem Schaft.

Es sind auch Befestigungsstifte bekannt, bei denen, ausgehend von der Oberseite eines solchen "Höhenanschlag"-Bundes, ein kurzer steiler Konus, d. h. mit kleinem Öffnungswinkel, ausgebildet ist. Durch dessen bündiges Einschlagen in eine metallene Stiftaufnahme bzw. in ein rohrförmig-metallenes Stuhl- oder Tischbein-Ende entsprechenden Durchmessers erfolgt ein Spielausgleich und kann durch das dabei herbeigeführte Verklemmen oder Verkeilen dieses Konusses ein den oberen Teil des Befestigungsstiftes stabilisierender Klemmsitz herbeigeführt werden.

Zum leichteren Einschlagen oder Eindrücken der unteren und oberen Stiftteile in die hülsenförmigen Stiftaufnahmen aus Kunststoff oder Metall bzw. in die Zinkdruckguss-Einschlaghülsen ist am Innenrand ihrer Öffnung eine kurze so genannte "Einlauf"-Fase ausgebildet. Sie erleichtert auch beim Stifteinschlagen das hierbei ggf. erfolgende Zusammendrücken der zuvor - ungespannt - über die Nuten überstehenden Sprengringe.

Außer den erwähnten ungünstigen Gestehungskosten hat diese bekannte Art und Weise der Befestigung von Rollen an Objekten mittels Befestigungsstiften noch einen ganz anderen, sehr viel gravierenderen Nachteil: Die Befestigungsstifte liegen mit ihrem flachen unteren Ende unmittelbar auf dem ebenfalls entsprechend flachen Boden des Rollenhalses des Lagerungsteils auf, auch wenn letzteres nur aus Kunststoff besteht. Dadurch sind diese Böden einer großen Beschädigungsgefahr ausgesetzt: Z. B. dann, wenn z. B. ein mit Möbelrollen ausgestatteter Drehstuhl, wie es z. B. immer wieder mal bei deren Transport vorkommt, aus einer gewissen Höhe herunterfällt und mit einer oder mehreren seiner Rollen auf den Boden auftrifft: Durch das Stuhlgewicht schlägt das untere Ende ihrer Befestigungsstifte mit entsprechender Wucht direkt auf den bzw. die in dieser Hinsicht viel zu schwach ausgebildeten Böden der sie haltenden Kunststoff-Rollenhälse auf und reißen sie ggf. vollständig von der hohlzylindrischen Hals-Seitenwandung ab, wodurch die Rollen unbrauchbar werden.

Die gleiche Gefahr besteht auch bei Rollen-Lagerungsteilen aus z. B. nicht viel stärker als Kunststoff belastbaren Zinkdruckguss, die zudem für den Halt der unteren Stiftteile ebenfalls kostenaufwändige Sprengringe erfordern.

Eine weitere solche Gefahr besteht dann, wenn z. B. eine in einem Sackloch in einem Holzteil, z. B. einer Zarge bei Polstermöbeln, eingesetzte Kunststoff- oder auch Zinkdruckguss-Stifthülse nicht endseitig am Grund des Sacklochs anliegt, etwa weil dieses tiefer gebohrt wurde. Dann kann zusätzlich zum Boden des Rollenhalses auch noch entweder der Befestigungsflansch dieser Stifthülse teilweise oder auch ganz abreißen, u. U. aber auch noch ihr Boden ein- oder ebenfalls abreißen.

Hinzu kommt, dass durch das bei dem zur Herstellung eines Kunststoff-Rollen-Lagerungsteils eingesetzte Kunststoff-Druckgieß- oder -Spritzgieß-Verfahren die Ausbildung der hülsenförmigen Befestigungsstift-Aufnahme mittels zylindrischer Kerne erfolgt. Beim anschließenden so genannten Einfrieren der Materialien entsteht dann eine Schwindung. Diese wirkt sich aufgrund der Geometrie des z. B. an einem Ende den Rollenhals aufweisenden Lagerungsteils ungleichmäßig aus und führt dazu, dass sich die ursprünglich kreisrunde Querschnittsform dieses Halses bzw. seines über das Lagerungsteil überstehenden Ansatzes in Richtung der Laufradachse oval oder elliptisch verformt und so ein Lagerspiel für den Befestigungsstift entsteht.

Da sich diese Achse beim Bewegen des Objekts, z. B. eines Drehstuhls, in Bewegungsrichtung gesehen, hinter dem Rollenhals mit dem darin eingesteckten Befestigungsstift befindet, die Rolle also vom Befestigungsstift gezogen wird, hat der Befestigungsstift das Bestreben, sich in Bewegungsrichtung schräg zu stellen und somit eine so angelegte ovale oder elliptische Querschnittsform und damit das Lagerspiel des Befestigungsstiftes im frei endenden Rollenhals-Ansatz zu vergrößern, was zu einer Verkürzung der Haltbarkeitsdauer der Rolle führt. Aus diesem Grund wird auch, wie schon weiter oben erwähnt, vermieden, dass der zuvor erläuterte, ggf. im mittleren Bereich des Befestigungsstiftes ausgebildete "Höhenanschlag"-Bund mit seiner Unterseite auf dem Öffnungsrand der Stiftaufnahme aufliegt. Dieser Rand würde sonst, abgesehen von der Behinderung der Rollen-Schwenkbewegungen, im Laufe der Drehstuhlbenutzung einseitig, d.h. auf der der Laufradachsenseite gegenüberliegenden Seite abgenutzt und könnte so schließlich die Dreh- bzw. Schwenkbewegungen der Rolle ggf. vollständig unterdrücken.

Dieses so genannte "Abkippen" der Befestigungsstifte kann auch zu einem hässlichen Schleifen der Laufräder einer so genannten offenen Rolle oder des Gehäuses einer so genannten geschlossenen Rolle bei Schwenkbewegungen am jeweiligen Objekt, z.B. einem Ledersofa, führen.

Eine Verlängerung der Befestigungsstifte könnte dies zwar verhindern, führte aber dazu, dass diese dann gegenüber der Rolle einen längeren Hebel bilden würden, was z.B. die Bruchgefahr für die Wandung des Rollenhalses als unterem Befestigungsstiftlager vergrößern würde.

Der Erfindung lag somit das Problem zugrunde, Rollen der eingangs beschriebenen Art dahingehend weiterzuentwickeln, dass zumindest das beschriebene Beschädigungsrisiko für die Rollenhals-Böden kostengünstig beseitigt wird.

Gelöst wird dieses Problem mit einer Rolle mit den Merkmalen gemäß Patentanspruch 1. Vorteilhafte Weiterbildungen sind Gegenstand der Unteransprüche.

Dadurch, dass am Befestigungsstift in einem mittleren, dem Öffnungsbereich der Rollen-Stiftaufnahme entsprechenden Stiftabschnitt wenigstens eine erste, zum oberen Stiftende hin sich nach Art eines Bundes oder mehrerer unmittelbar aufeinander folgender oder stufenförmig voneinander abgesetzt aufeinander folgender Bunde erweiternde Materialverdickung ausgebildet ist, dass die Materialverdickung ein Stütz-, Gleit- und Führungslager für den in die Rollen-Stiftaufnahme eingesteckten unteren Stiftteil des Befestigungsstiftes bildet, und dass im Randbereich der Aufnahmeöffnung der Rollen-Stiftaufnahme für diese erste Materialverdickung ein Auflager mit an die Kontur dieser Materialverdickung angepasst komplementärer Ausgestaltung ausgebildet ist, wird Folgendes erreicht:

Die vom oberen Ende der an Rolle und Objekt gehaltenen Befestigungsstifte vom Objekt aufzunehmenden Lasten können nun über die erfindungsgemäß an ihrem Umfang im mittleren Bereich als eine Art Befestigungsstift-Entlastungstütze bzw. Teil eines zusätzlichen Entlastungslagers ausgebildete Materialverdickung und das dafür, daran angepasst, komplementär dazu oben am Rollenhals ausgebildete Auflager in dessen kurze hohlzylindrische, also rohrförmige, d. h. sehr stabile Wandung eingeleitet werden. D. h. in eine Wandung mit einer kreisringförmigen Querschnittsform mit an die vorhersehbaren Belastungen entsprechend anpassbarer Wanddicke. Sie ist dadurch gegenüber dem flach ausgebildeten Boden eines Rollenhalses um ein Vielfaches stabiler und damit zur besagten Lastaufnahme jeweils in einer Größenordnung von z.B. 40 bis 70 kg und mehr viel besser geeignet ist. Über diese Wandung können erfindungsgemäß nun die Objektlasten teile- und materialschnonend auf das Rollen-Lagerungsteil und von dort über die Rollen-Laufradachse auf die Laufräder abgeleitet werden.

Dabei kann einerseits diese Materialverdickung kostengünstig im Zusammenhang mit der anderweitig durchzuführenden Kaltumformung des Befestigungsstiftes und andererseits das dafür vorzusehende Auflager ohne zusätzliche Kosten bei der Ausbildung des Kunststoff-Rollenhalses mit ausgebildet werden.

Ein solcher, aufgrund der dafür an einem Stahlstift wählbaren Dimensionen geradezu auf unscheinbare Weise ausbildbarer Teil eines Stütz- oder Entlastungslagers für den Befestigungsstift in Form einer Materialverdickung mit einer sozusagen schlichten, z. B. nur bis ca. 3 mm vom Stiftschaftumfang rotationssymmetrisch auskragend ausgebildeten, z. B. konischen Stift-Auflage und einer, daran angepasst, komplementär dazu auf der Innenseite des Öffnungsrandes des Kunststoff-Rollenhalses, gewissermaßen nach Art einer - ggf. etwas verlängerten - konischen Einlauffase, dementsprechend konisch ausgebildeten Auflager mit einer Auflage-Gegenfläche für die Materialverdickungs-Mantelfläche, hat eine überraschend weitreichende Wirkung: Ein solches zusätzliches Befestigungsstift-Entlastungslager beseitigt absolut zuverlässig nicht nur die oben beschriebene Gefahr der Beschädigung des Bodens des Rollenhalses bei insbesondere plötzlicher übermäßiger Stoßbelastung des Befestigungsstiftes, wie z. B. beim Herunterfallen eines Drehstuhls aus auch nur geringer Höhe, sondern wegen seiner zusätzlichen Führungseigenschaften aufgrund z. B. satt aneinander anliegender Lagerflächen, zusätzlich zur schon spielfreien Lagerung des Befestigungsstiftes im Rollenhals, auch die Gefahr von Verformungen der Rollenhals-Wandung, wie z. B. ein Ausbrechen durch das erwähnte Abkippen der Befestigungsstifte.

Dadurch könnte nun z. B. für die Herstellung des Lagerungsteils der Rollen auch ein kostengünstigerer Kunststoff verwendet werden.

Diese erfindungsgemäßen zwei komplementär ausgebildeten Stützelemente an Befestigungsstift und Rollenhals zur Ausbildung eines Befestigungsstift-Stützlagers, die zudem gleichzeitig auch zusätzliche Gleit- und Führungselemente bzw. sogar geschlossene Gleit- und Führungsflächen für das Drehen des Befestigungsstiftes mit seinem unteren Teil im Rollenhals um seine vertikal ausgerichtete Längsachse und für seine Führung hierbei bilden, stellen somit auch zumindest ein, ggf. aber auch mehrere zusätzliche Stütz-, Gleit- und Führungslager dar, die durch ihre Konzeption vor allem auch hohe Stoß-belastungen aufnehmen können, ohne die Lebensdauer der daran beteiligten Bauteile oder deren Funktion zu beeinträchtigen.

Aufgrund des Zusammenwirkens von zwei komplementär ausgebildeten, zum Aufeinanderliegen bestimmten Stützelementen mit z. B. einer - nicht unterbrochenen - metallenen Mantelfläche des stählernen Befestigungsstiftes und z. B. einer - nicht unterbrochenen - Kunststofffläche des Rollenhalses, wird insbesondere auch gerade die z. B. bei Möbelrollen gewünschte Lenkbarkeit, nämlich sich als Lenkrolle für einen Richtungswechsel trotz Belastung leicht und ohne großen Kraftaufwand in eine andere Richtung zu drehen, wesentlich verbessert, und zwar ganz ohne Schmierung.

Davon abgesehen kann als Folge des erfindungsgemäßen Befestigungsstift-Stützlagers z. B auch der Durchmesser des Rollenhalses reduziert werden, was der Verbesserung der unteren Befestigungsstift-Lagerung dient. Zudem kann der von der Rollen-Stiftaufnahme aufgenommene untere Befestigungsstift-Abschnitt kürzer sein als bisher, so dass dementsprechend auch der Rollenhals, und zwar ohne hierzu dessen Wandungsdicke vergrößern zu müssen, kürzer ausgebildet werden kann. Das wiederum wirkt sich vorteilhaft auf die Bauhöhe einer erfindungsgemäß ausgebildeten Rolle, insbesondere Möbelrolle, aus: Die Bauhöhe kann nun, wie aus optischen Gründen von Möbeldesigern immer wieder gewünscht, vorteilhaft, z. B. im Hinblick auf Hartbelagsböden, entsprechend kleiner ausfallen.

Mit Vorteil können zur Erweiterung der Wirkung der Erfindung die erfindungsgemäß im mittleren Stiftschaftbereich mit einer bundartigen Materialverdickung versehenen Befestigungsstifte noch mit einer dazu sozusagen spiegelbildlich ausgebildeten zweiten bundartigen Materialverdickung versehen werden, um so ebenfalls vorrangig ein Stützelement für ein zweites Stützoder Entlastungslager auszubilden, und zwar für die den oberen Stiftteil der Befestigungsstifte am Objekt haltenden hülsenartig daran ausgebildeten Befestigungsstift-Aufnahmen bzw. die daran montierten Stift-Einschlaghülsen.

Eine solche zweite, obere, ebenfalls kostengünstig durch Kaltumformung ausbildbare Materialverdickung kann ggf. unmittelbar von der Oberseite der ersten Materialverdickung oder aber, ähnlich wie z. B. bei dem oben erwähnten zylindrischen "Höhenanschlag"-Bund, von der Oberseite eines dazwischen ausgebildeten Beabstandungsbundes ausgehen.

Im Hinblick auf die Anpassung der Abmessungen dieser zweiten Materialverdickung an die der an diesbezüglichen Objekten vorgesehenen Stiftaufnahmen bzw. Einschlaghülsen weist sie einen gegenüber der unteren Materialverdickung geringeren Außendurchmesser auf und verringert sich, davon ausgehend, in Richtung zum oberen Ende des Befestigungsstiftes bis auf den Umfang des oberen zylindrischen Stiftteils. Z. B. ebenfalls einfach oder aber auch durch Absätze bzw. Bunde gestuft sowie vorzugsweise ebenfalls konisch. Dann jedoch mit einem gegenüber dem Konus eines "Höhenanschlag"-Bundes breiteren Öffnungswinkel, um so die bei diesem ausdrücklich gewünschte Klemmwirkung auszuschließen.

Das zur Ausbildung eines zweiten Stützlagers erforderliche zweite, zur zweiten Materialverdickung komplementäre Lagerelement in Form einer auf ihr aufliegenden Schulter wird im Innenrandbereich der Einstecköffnung der jeweiligen Objekt-Stiftaufnahmen bzw. der mit einem Randflansch versehenen Stift-Einschlaghülsen ebenfalls kostengünstig bei deren Herstellung anstelle der sonst an diesen - meist aber steiler - ausgebildeten Einlauffasen ausgebildet.

Dadurch besteht nun auch hier die sehr bedeutsame zusätzliche Möglichkeit, die vom oberen Stiftteil des Befestigungsstiftes vom Objekt von einer hülsenartig an letzterem ausgebildeten Stiftaufnahme oder in letzteres eingeschlagenen Objekt-Stifthülse aufgenommene statische und dynamische Objektlast über das erfindungsgemäß im Bereich ihrer jeweiligen Aufnahmeöffnung an ihrer hohlzylindrischen und im Vergleich zu ihrem Boden damit ebenfalls sehr stabile Wandung angepasst komplementär als Schulter ausgebildete Stützelement über die für diese Schulter als Auflager an seinem Schaft ausgebildete zweite Materialverdickung aufzunehmen. Die Objektlast wird dann ebenfalls teile- und materialschonend über die dafür am Schaft des Befestigungsstiftes ausgebildete erste bzw. untere Materialverdickung und das dazu komplementäre Gegenelement am oberen Ende des Rollenhalses in diesen eingeleitet und schließlich auch an die Laufradachse weitergeleitet. Auf diese Weise kann auch eine Beschädigung insbesondere des Bodens von Einschlaghülsen, insbesondere solchen aus Kunststoff, sicher vermieden werden. Dies gilt auch für Kunststoffhülsen, die, wie schon erwähnt, in die Enden von Tisch- und Stuhlrohrbeinen eingesteckt werden.

Bei einer solchen Stift-Ausgestaltung mit einer zusätzlichen oberen, sich nach unten erweiternden Materialverdickung ist der z.B. in eine erfindungsgemäß ausgebildete Kunststoff-Einschlaghülse eingesteckte, statt kostenaufwändig mit Sprengring nun kostengünstig durch Nut und Kunststoffwulst bzw. Warzen darin gehaltene Befestigungsstift, wie schon der in den Rollenhals eingesteckte untere Stiftteil, ebenfalls darin um seine vertikal ausgerichtete Längsachse drehbar, was die Lenkrollenfunktion dieser Rollen zusätzlich begünstigt.

Zudem ergibt sich durch ein solches zweites Stützlager und der Führungseigenschaft auch seiner zwei komplementären, aufeinander liegenden Stützlagerelemente und deren ggf. ausgebildeten Mantelflächen eine sehr stabile spielfreie Lagerung des oberen Teils des Befestigungsstiftes in einer solchen Kunststoff-Einschlaghülse. So wird auch der bislang kostenaufwändig manuell auf dem oberen Teil des Befestigungsstiftes in einer Nut eingesetzte, die Drehung des oberen Befestigungsstift-Teils bisher ggf. verhindernde Sprengring überflüssig.

Durch den Wegfall des Sprengrings kann die Stift-Haltenut am oberen Stiftteil statt durch kostenaufwändiges Einstechen nun ebenfalls kostengünstig bei der anderweitig durchzuführenden Kaltumformung des Befestigungsstiftes mit ausgebildet werden.

Des Weiteren könnten nun auch im Polstermöbelbereich die bislang zur Lagerung der oberen Teile der Befestigungsstifte bevorzugt benutzten Zinkdruckguss-Einschlaghülsen durch diese vorteilhaft mit einer Stütz-, Gleit- und Führungsfläche am Hülsenöffnungsrand ausgebildeten Einschlaghülsen aus zumindest beschränkt nachgiebigem Kunststoff ersetzt werden, zumal auch bei einer Verwendung an ggf. noch einem Trocknungsschwund unterliegenden Holzteilen, die dabei durch Zinkdruckgusshülsen ggf. sogar gespalten werden können, weniger bruchgefährdet sind. Die damit einhergehende höhere Lebenserwartung dieser Rollen kann zum Nutzen der Verbraucher z. B. zu einer entsprechenden Garantieverlängerung führen. Außerdem wäre damit auch eine nicht unbedeutende Kosteneinsparung möglich, da Kunststoff kostengünstiger als Zinkdruckguss ist.

Wie schon erwähnt, kann auch zwischen der erfindungsgemäßen unteren und der erfindungsgemäß ausgebildeten zusätzlichen oberen bundartigen Materialverdickung des Befestigungsstiftes, wenn letztere gegenüber der unteren vorzugsweise einen kleineren Außendurchmesser aufweist, ein zusätzlicher schmaler ringförmig-zylindrischer Bund ausgebildet sein. Dieser kann dann in eine entsprechende zentrisch ausgebildete Vertiefung in der losen Einsteckhülse, z. B. an der Unterseite ihres flanschartig verbreitert ausgebildeten Öffnungsrandes, eintauchen und so das Eindringen von Schmutz in diese Hülse zusätzlich verringern.

Es ist auch denkbar, dass die beiden Materialverdickungen und das jeweils dazu als Auflager bzw. Schulter vorgesehene Gegen-Lagerelemente nicht, wie im Falle einer konischen einerseits bzw. komplementär-konischen Ausgestaltung andererseits, eine geschlossen umlaufende Mantelfläche aufweisen. Stattdessen können z. B. die von den beiden jeweils rotationssymmetrischen Materialverdickungen erzeugten Drehkörper durch z. B. spalt- oder schlitzartig vertikal verlaufend ausgebildete Zwischenräume in zumindest lamellenartige Abschnitte unterteilt sein, so dass keine geschlossene Mantelfläche entsteht. Weisen dann die komplementären Gegenlager, also das Auflager für die untere Materialverdickung oben am Rollenhals und die Schulter für die obere Materialverdickung z. B. innen am Öffnungsrand der Objekt-Stifthülse, eine geschlossen umlaufend ausgebildete Mantelfläche auf, dann hat das keine negativen Auswirkungen auf die Stütz-, Gleit- und Führungseigenschaften der jeweils zwei Lagerelemente.

Diese unterschiedliche Oberflächen-Ausgestaltung von Materialverdickung einerseits und Gegenlager, also Auflager bzw. Schulter, andererseits, kann natürlich auch umgekehrt realisiert werden. Dann könnten den z. B. geschlossen umlaufenden konischen Mantelflächen der beiden Materialverdickungen eine durch rillenförmige Vertiefungen oder rippenförmige Erhöhungen geriffelte Oberflächenstruktur bei Auflager bzw. Schulter gegenüberstehen, was ebenfalls keine negativen Auswirkungen auf die Stütz-, Gleit- und Führungseigenschaften dieser damit gebildeten zusätzlichen Stütz, Gleit- und Führungslager hätte. In die von den Vertiefungen bzw. Erhöhungen gebildeten Zwischenräume könnte z. B. Fett zur Schmierung dieser Lager eingebracht werden.

Erfindungsgemäß zusätzlich mit zumindest der unteren, vorzugsweise aber mit einer unteren und einer oberen Materialver-dickung versehene Rollen-Befestigungsstifte können vorteilhaft auch zur Befestigung von - im Gegensatz zu Rollen unbeweglichen - Füßen, wie auch Gleitern, an Objekten verwendet werden. Dazu müssten diese Füße und Gleiter lediglich ebenfalls an ihrem oberen, entsprechend dimensionierten Ende mit einer den unteren Stiftteil des Befestigungsstiftes aufnehmenden Stiftaufnahme, z. B. in Form einer Einschlaghülse aus Kunststoff, die z. B. in das obere, z. B. halsartige Ende z. B. eingepresst ist, oder in Form einer einem erfindungsgemäß ausgebildeten Rollenhals entsprechenden Ausgestaltung versehen werden.

Die Objekte, an denen sie befestigt werden sollen, müssten dementsprechend eine hülsenartige Stiftaufnahme, vorzugsweise aber eine Ausnehmung, z. B. eine entsprechende Sackbohrung, für eine erfindungsgemäß als Objekt-Stifthülse ausgebildete Kunststoff-Einschlaghülse aufweisen. Diese Objekt-Stiftaufnahmen bzw. Objekt-Stifthülsen müssten zumindest an die untere, besser aber beide Materialverdickungen des Befestigungsstiftes angepasste, als Stützlagerelemente komplementär dazu ausgebildete Auflager bzw. Schultern aufweisen. Dadurch kann dann auch - wie bei Rollen - die Montage von Füßen oder Gleitern an Objekten verbilligt, vereinfacht und beschleunigt werden. Hinzu kommt, dass die Lagerhaltung für diesbezügliche Ersatzteile durch Reduzierung der bisherigen Vielfalt vereinfacht und verbilligt werden kann.

Besonders bedeutsam wird dies bei Objekten, wie z. B. Polstermöbeln, an denen z. B. an der Vorderseite Rollen und an der Rückseite Füße oder Gleiter, zudem mit möglichst demselben Design, verbaut werden sollen, um sie, wenn sie bewegt werden sollen, auf wenigstens zwei Rollen rollen zu können, sie aber ansonsten, aufgrund der Füße bzw. Gleiter, sehr sicher gegen ungewollte Bewegung an ihrem Platz stehen. Hier ist es dann auch wichtig, dass Rollen und Füße bzw. Gleiter die gleiche Bauhöhe aufweisen, was durch erfindungsgemäß ausgestaltete Befestigungsstifte ggf. leichter gewährleistet werden kann.

Anhand von schematischen Zeichnungen werden nachfolgend ein bevorzugtes und ein dazu alternativ ausgestaltetes weiteres Ausführungsbeispiel der Erfindung beschrieben, wobei gleiche oder einander entsprechende Teile mit übereinstimmenden Bezugszahlen bezeichnet sind, von denen die solcher Teile des weiteren Ausführungsbeispiels durch ein ihnen nachgestelltes einfaches Anführungszeichen indiziert sind.

Es zeigen:
- Fig. 1: in Vergrößerung eine erfindungsgemäß ausgebildete Rolle in Benutzungsstellung in der Draufsicht;
- Fig. 2: den Schnitt durch die Rolle entlang der Linie A-A in Fig. 1 in einer um 90° gedrehten Ansicht, wobei das dem Betrachter zugewandte Laufrad entfernt ist und der Rollen-Befestigungsstift die in Fig. 4b gezeigte alternative Ausgestaltung aufweist;
- Fig. 3: den Schnitt durch die Rolle entlang der Linie A-A in Fig. 1 in einer perspektivischen Rückansicht,
- Fig. 4a: den Schnitt nach Fig. 3 ebenfalls in der Rückansicht,
- Fig. 4b: die Schnittansicht nach Fig. 4a mit einer anderen Ausführungsform sowohl des Bundes zwischen der unteren und oberen als auch der oberen Materialverdickung des Rollen-Befestigungsstiftes und
- Fig. 4c: die in Fig. 4b durch einen Kreis gekennzeichnete Einzelheit X in einem wesentlich vergrößerten Maßstab.

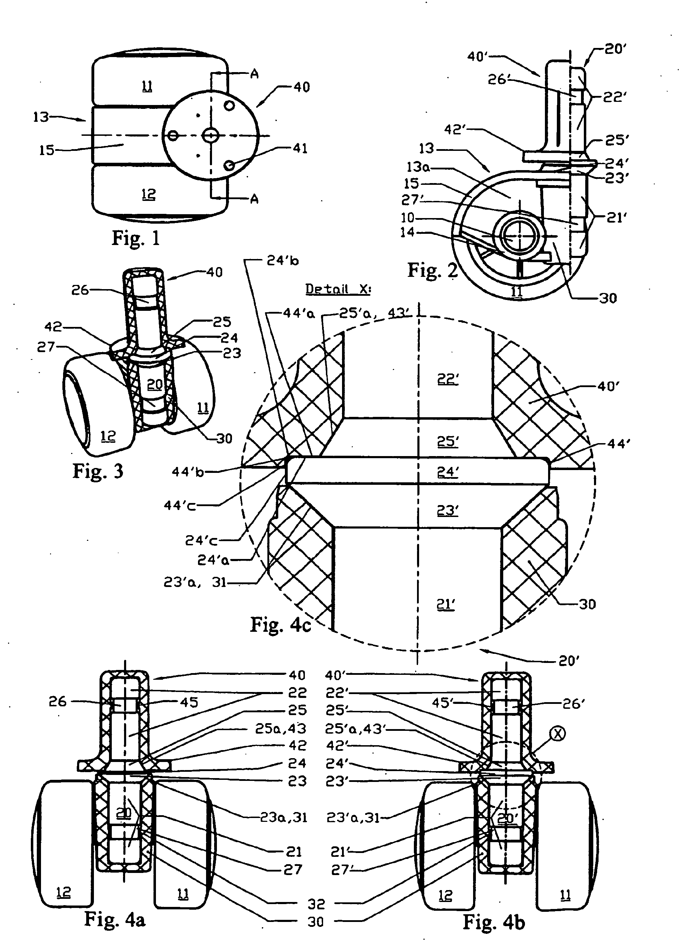

Die in den Figuren überwiegend annähernd im Maßstab 1 : 1 gezeigten zwei, insbesondere als Möbelrolle zu verbauenden so genannten offenen Rollen haben zwei nicht von einer Gehäuseblende überdeckte, endseitig auf einer Laufradachse 10 (Fig. 2) gelagerte Laufräder 11, 12 mit einem Durchmesser von hier ca. 36 mm. Die Laufradachse 10 ist in einer an einem zwischen den Laufrädern 11, 12 platzierten, in der Mitte lediglich scheibenförmig ausgestalteten Rollen-Lagerungsteil 13 aus Kunststoff, z. B. Polyamid, ausgebildeten Lagerbuchse 14 horizontal gelagert. Sie und die Lagerungsteil-Scheibe 13a ist von einer an den Durchmesser der Laufräder 11, 12 angepassten, annähernd viertelkreisförmig einen Teil des Zwischenraums zwischen den Laufrädern 11, 12 gehäuseähnlich überdeckenden Art Abdeckblende 15 überdeckt.

Die beiden gezeigten Rollen werden mittels eines ca. 53 mm langen zylindrischen Befestigungsstiftes 20 (Fig. 3, 4a) bzw. 20' (Fig. 2, 4b und 4c), der jeweils annähernd hälftig in einen unteren Stiftteil 21 bzw. 21' mit ca. 9 mm und einen oberen Stiftteil 22 bzw. 22' mit ca. 8 mm Durchmesser gegliedert ist, an den mit ihr auszurüstenden, nicht gezeigten Objekten befestigt. Hierzu ist an ihrem Lagerungsteil 13 an einem Ende, d. h. in einem in der Rollenbenutzungsstellung horizontalen Abstand von der Lagerbuchse 14, eine hülsenartige, d. h. hohlzylindrische, Rollenhals genannte Stiftaufnahme 30 ausgebildet. Sie steht nach hinten und - aus Beabstandungsgründen - geringfügig auch nach oben über die Laufräder 11, 12 über, hat aus Entformungsgründen eine sich leicht konisch nach unten verjüngende Kontur und ist mit dem Rollen-Lagerungsteil 13 um die Laufradachse 10 schwenkbar.

In den Rollenhals 30 ist jeweils der untere Stiftteil 21, 21', z.B. durch Eindrücken, aufgenommen. Der obere Stiftteil 22, 22' ist jeweils, zur Veranschaulichung einer Erweiterung der Wirkung der Erfindung, in eine als solche bekannte, jedoch in ihrem Öffnungsrandbereich erfindungsgemäß abgewandelt ausgebildete, ebenfalls z.B. aus Polyamid bestehenden Kunststoff-Einschlaghülse 40, 40' aufgenommen gezeigt. Letztere wird ansonsten normalerweise, wie auch die bereits erwähnten Zinkdruckguss-Einschlaghülsen, zunächst in Holzteile, wie z.B. Zargen, am mit Rollen auszustattenden Objekt üblicherweise sacklochförmig ausgebildeten Ausnehmungen eingeschlagen und durch die Nagellöcher 41 (Fig. 1) in ihrem Öffnungsrandflansch 42, 42' mit Nägeln zusätzlich daran gesichert, bevor dann üblicherweise der obere Stiftteil 22, 22' bei zuvor im Rollenhals 30 eingedrückten unteren Stiftteil 21, 21' mittels der Rolle darin eingeschlagen oder eingedrückt wird.

Im mittleren Schaftbereich des Befestigungsstiftes 20, 20' ist erfindungsgemäß eine bundartig vom Umfang des gewissermaßen oberen Endes des unteren Stiftteils 21, 21' ausgehend, sich auf eine Länge von ca. 3 mm konisch mit einem Öffnungswinkel von ca. 90° in Richtung zum oberen Stiftende bis auf einen Durchmesser von ca. 14 mm erweiternde erste bzw. untere Materialverdickung 23, 23' ausgebildet.

Angepasst an ihre konische Mantelfläche 23a, 23'a ist als Auflager komplementär, d. h. umgekehrt konisch, die Gegenfläche 31 im Öffnungsrandbereich des Rollenhalses 30 schräg einwärts nach unten gerichtet in dessen hohlzylindrischer Wandung ausgebildet. Sie ist dazu bestimmt, zusammen mit der Mantelfläche 23a, 23'a der unteren Materialverdickung 23, 23' ein Stütz-, Gleit- und Führungslager für den in den Rollenhals 30 eingesteckten unteren Stiftteil 21, 21' des Befestigungsstiftes 20, 20' zu bilden.

Hierzu sind die Länge des zylindrischen Abschnitts des unteren Stiftteils 21, 21' unterhalb der unteren Materialverdickung 23, 23' und die Länge des entsprechenden hohlzylindrischen Abschnitts des Rollenhalses 30 unterhalb der komplementär-konischen Auflager-Gegenfläche 31 so aufeinander abgestimmt, dass erstere vollflächig-satt auf letzterer aufliegt. Denn nur so kann sichergestellt werden, dass die Stütz-, Gleit- und Führungseigenschaften des von ihnen gebildeten Stütz-, Gleit- und Führungslagers ihre den Befestigungsstift 20, 20' stützende und damit entlastende Wirkung entfalten, wenn sein oberer Stiftteil 22, 22' vom betreffenden Objekt, insbesondere über eine vorzugsweise daran montierte Objekt-Stifthülse 40, 40' aus Kunststoff, belastet wird, jedoch der Boden des Rollenhalses 30 von jeder vom betreffenden Objekt ausgehenden statischen und dynamischen Belastung freigehalten werden soll. Hierzu ist diese zur Weiterleitung an die Laufradachse 10 zunächst über diese erfindungsgemäße Lagerausgestaltung 23, 31 bzw. 23', 31, in die stabile rohrförmige Wandung des Rollenhalses 30 einleitbar.

Die untere Materialverdickung 23, 23' setzt sich an ihrer Oberseite in einem schmalen, z. B., wie in Fig. 3 und 4a gezeigt, nur ca. 1 mm hohen zylindrischen Bund 24 gleichen Durchmessers fort. Ein solcher Bund 24 oder auch 24' kann z. B. verhindern, dass der flanschartig verbreiterte Rand 42, 42' der den oberen Stiftteil 22, 22' aufnehmenden Objekt-Stifthülse 40, 40' und der Öffnungsrand des Rollenhalses 30 sich u. U. berühren und aneinander reiben, da der untere 21, 21' und der obere Stiftteil 22, 22' sich um die Längsachse des Befestigungsstiftes 20, 20' in dem sowohl aus Kunststoff bestehenden Rollenhals 30 als auch ebenso der Objekt-Stifthülse 40, 40' drehen können, obwohl sie darin jeweils mittels einer in ihren Nuten 26, 26', 27, 27' eingerasteten Wulst 32, 32', 45, 45' gehalten sind, und somit ein sonst dieses Drehen meistens verhindernder kostenaufwändiger Sprengring hier nicht mehr erforderlich ist.

Für die weiter oben erwähnte zusätzliche Erweiterung der Wirkung der Erfindung ist z. B., wie ebenfalls in den Fig. 3 und 4a zu sehen ist, am Befestigungsstift 20 eine an seinem oberen Stiftteil 22 sich in einem Abstand von ca. 3 mm von der Oberseite des zylindrischen Beabstandungsbundes 24 vom Umfang des oberen Stiftteils 22 mit einem Öffnungswinkel von ca. 60°, d. h. steiler als die untere Materialverdickung 23, konisch nach unten bis zu einem Außendurchmesser von ca. 10 mm erweiternde, auf der Oberseite des Beabstandungsbundes 24 endende zweite bzw. obere Materialverdickung 25 ausgebildet.

Diesbezüglich ähnliche Verhältnisse gelten für die in den Fig. 2, 4b und 4c dargestellte obere Materialverdickung 25', wie weiter unten noch erläutert wird.

Die konische Mantelfläche 25a, 25'a dieser oberen Materialverdickung 25, 25' ist zum Zusammenwirken mit einer im Öffnungsrandbereich der hohlzylindrischen Wandung der Objekt-Stifthülse 40, 40' erfindungsgemäß komplementär-konisch, d. h., ähnlich wie eine Einlauffase, schräg einwärts nach oben gerichtet ausgebildeten Gegenfläche 43, 43' bestimmt, für welche sie eine Auflage-Schulter bildet.

Hierzu sind ebenfalls die Länge des zylindrischen Abschnitts des oberen Stiftteils 22, 22' und die Länge des hohlzylindrischen Abschnitts der Objekt-Stifthülse 40, 40' so aufeinander abgestimmt, dass die konische Mantelfläche 25a, 25'a der oberen Materialverdickung 25, 25' ebenfalls vollflächig-satt an der jeweils daran angepasst komplementär-konisch ausgebildeten Gegenfläche der Auflage-Schulter 43, 43' der Stifthülse 40, 40' anliegt. So kann auch hier sichergestellt werden, dass die Stütz-, Gleit- und Führungseigenschaften des auch von diesen beiden Komplementär-Flächen 25a, 25'a und 43, 43' gebildeten zusätzlichen Stütz-, Gleit- und Führungslagers dann ihre Wirkungen entfalten, wenn der Befestigungsstift 20, 20' über die Stifthülse 40, 40' vom Objekt an seinem oberen Stiftteil 22, 22' belastet wird.

Die vom jeweiligen Objekt ausgehenden statischen und dynamischen, insbesondere auch Stoß-Belastungen, können aufgrund dieser zusätzlichen oberen Materialverdickung 25, 25' vom Befestigungsstift 20, 20' statt, wie im Stand der Technik, von seinem den Boden der Objekt-Stifthülse 40, 40' gefährdenden flachen Ende seines oberen Stiftteils 22, 22' über die an der konischen Gegenfläche 43, 43' an dieser Einschlaghülse 40, 40' anliegenden konischen Mantelfläche 25a, 25'a der oberen Materialverdickung 25, 25' ebenfalls teile- und materialschonend aufgenommen und über die untere Materialverdickung 23, 23' in die dafür geeignete stabile Wandung des Rollenhalses 30 eingeleitet werden. D. h. unter Vermeidung eines mit Bruchgefahr verbundenen Anschlagens des flachen Endes des oberen Stiftteils 22, 22' auf den Boden dieser Stifthülse 40, 40'.

Um den unteren Stiftteil 21, 21' im Rollenhals 30 und den oberen Stiftteil 22, 22' in der gezeigten Einschlaghülse 40, 40' zu arretieren, ist an ihnen jeweils eine Nut 26, 26', 27, 27' ausgebildet. Darin greift anstelle eines kostenaufwändig darin einzusetzenden Sprengrings eine an der Innenwandung des hier nun aus Kunststoff bestehenden Rollenhalses 30 bzw. der Innenwandung der Objekt-Stifthülse aus Kunststoff 40, 40' offen oder geschlossen umlaufend ausgebildete Wulst 32, 32' bzw. 45, 45' oder auch Warzen ein, wodurch der Befestigungsstift 20, 20' weiterhin mit Vorteil für vertikale Schwenkbewegungen der Rolle um seine Längsachse drehbar ist.

Eine Abwandlung der in den Fig. 3 und 4a gezeigten dreifach bundartigen Ausgestaltung des Befestigungsstiftes 20 in seinem mittleren Schaftbereich weist der in den Fig. 2, 4b und 4c gezeigte Befestigungsstift 20' auf: Bei ihm ist die obere, nach unten sich konisch erweiternde Materialverdickung 25' im Vergleich zu derjenigen 25 in den Fig. 3 und 4c etwas kürzer, dafür aber der zylindrische Beabstandungsbund 24' zwischen unterer 23' und oberer Materialverdickung 25' etwas höher ausgebildet. Dadurch kann dieser Bund 24' eine Art Schulter mit weiteren Stütz-, Gleit- und Führungsflächen 24'a, 24'b, 24'c für die auch hier beispielhaft gezeigte Objekt-Stifthülse 40' bilden. Hierfür taucht er in eine im flanschartig verbreiterten Öffnungsrand 42' der Stifthülse 40' ausgebildete Vertiefung 44' (Fig. 4c) ein, wodurch nicht nur auch der Öffnungsbereich dieser Stifthülse 40', z. B. gegen Verschmutzung, zusätzlich verdeckt wird, ohne dass z. B. das Drehen des Befestigungsstiftes 20' in dieser Hülse 40' beeinträchtigt werden würde. Stattdessen tritt eine zusätzlich stützende und führende, d. h. stabilisierende Wirkung ein.

Durch diese veränderte Ausgestaltung des Befestigungsstiftes 20' in seinem mittleren Stiftabschnitt werden, wie in Fig. 4c vergrößert gezeigt, im Zusammenwirken mit der Vertiefung 44' weitere Stütz-, Gleit- und Führungsflächen 44'a, 44'b und 44'c für den in die Objekt-Stifthülse 40' aufgenommenen oberen Stiftteil 22' ausgebildet.

Statt konisch-plan bzw. zylindrisch-plan können diese Stütz-, Gleit- und Führungsflächen auch z. B. konvex oder konkav gewölbt und dementsprechend dann auch die dazu komplementären Gegenflächen ausgebildet sein.

Es versteht sich, dass die in den Figuren gezeigten Ausgestaltungen von komplementär an Befestigungsstift 20, 20' und Rollenhals 30 bzw. Objekt-Stifthülse 40, 40' ausgebildeten Stütz-, Gleit- und Führungsflächen andere Ausgestaltungen nicht ausschließen. Z. B. zwei oder auch mehr stufenförmig, d. h. mit bundartigen Zwischenabsätzen übereinander, d. h. unterbrochenen, sich erweiternd oder verringernd ausgebildete Stütz-, Gleit- und Führungsflächen mit z. B. konischem, konvex oder konkav gewölbtem und dgl. (Mantel-)Flächenverlauf.

Auch sind andere als die in den Figuren gezeigten Öffnungswinkel der beiden am Befestigungsstift 20, 20' konisch ausgebildet gezeigten unteren 23, 23' und oberen Materialverdickung 25, 25' am Befestigungsstift 20, 20' und den an Rollenhals 30 bzw. Objekt-Stifthülse 40, 40' gezeigten, dazu komplementär-konisch ausgebildeten Mantelflächen realisierbar, ohne die Wirkung der Erfindung zu beeinträchtigen.

### Bezugszeichenliste

- 10: Laufradachse
- 11: Laufrad
- 12: Laufrad
- 13: Rollen-Lagerungsteil
- 13a: Lagerungsteil-Scheibe
- 14: Lagerbuchse
- 15: Abdeckblende
- 20, 20': Befestigungsstift
- 21, 21': unterer Stiftteil
- 22, 22': oberer Stiftteil
- 23, 23': erste (untere) Materialverdickung
- 23a, 23'a: konische Mantelfläche (von 23, 23')
- 24, 24': zylindrischer Beabstandungsbund
- 24'a, 24'b, 24'c: weitere Stütz-, Gleit- u. Führungsflächen
- 25, 25': zweite (obere) Materialverdickung
- 25a, 25'a: konische Mantelfläche (von 25, 25')
- 26, 26': Nut
- 27, 27': Nut
- 30: Rollen-Stiftaufnahme bzw. Rollenhals
- 31: Auflager/komplement. Gegenfläche (f. 23a, 23'a)
- 32, 32': Wulst
- 40, 40': Objekt-Stifthülse
- 41: Nagellöcher
- 42, 42': Öffnungsrandflansch
- 43, 43': Auflage-Schulter/komplementäre Gegenfläche (für 25a, 25'a)
- 44': Vertiefung
- 44'a, 44'b, 44'c: weitere Stütz-, Gleit- u. Führungsflächen
- 45, 45': Wulst

## Patentansprüche

1. Rolle, insbesondere Möbelrolle, mindestens mit einem Rollen-Lagerungsteil (13) mit wenigstens einem darin oder daran gelagerten Laufrad oder zwei beidseits davon endseitig auf einer daran gelagerten Laufradachse (10) gelagerten Laufrädern (11, 12), und einer in einem horizontalen Abstand von der Laufradachse (10) darin angeordneten, aus Kunststoff bestehenden oder, bei einem Rollen-Lagerungsteil (13) aus Kunststoff, daran ausgebildeten hohlzylindrischen, hülsenartig am unteren Ende geschlossenen Rollen-Stiftaufnahme (30), die dazu bestimmt ist, einen unteren Stiftteil (21, 21') eines metallenen Rollen-Befestigungsstiftes (20, 20') aufzunehmen, von dem ein oberer Stiftteil (22, 22') zur vertikalen Anordnung in einem dafür an einem Rollen-Objekt ebenfalls hohlzylindrisch, hülsenartig am oberen Ende geschlossen ausgebildeten Objekt-Stiftaufnahme oder in einer an einem Rollen-Objekt in einer Sackbohrung angeordneten losen Objekt-Stifthülse (40, 40') bestimmt ist,
**dadurch gekennzeichnet,**
- **dass** am Befestigungsstift (20, 20') in einem mittleren, dem Öffnungsbereich der Rollen-Stiftaufnahme (30) entsprechenden Stiftabschnitt wenigstens eine erste, zum oberen Stiftende hin sich nach Art eines Bundes oder mehrerer unmittelbar aufeinander folgender oder stufenförmig voneinander abgesetzt aufeinander folgender Bunde erweiternde Materialverdickung (23, 23') ausgebildet ist,
- **dass** die erste Materialverdickung (23, 23') ein Stütz-, Gleit- und Führungslager für den in die Rollen-Stiftaufnahme (30) eingesteckten unteren Stiftteil (21, 21') des Befestigungsstiftes (20, 20') bildet, und
- **dass** im Randbereich der Aufnahmeöffnung der Rollen-Stiftaufnahme (30) für diese erste Materialverdickung (23, 23') ein Auflager (31) mit an die Kontur dieser Materialverdickung (23, 23') angepasst komplementärer Ausgestaltung ausgebildet ist.

2. Rolle nach Anspruch 1, **dadurch gekennzeichnet, dass** sich die erste Materialverdickung (23, 23') konisch nach oben erweitert.

3. Rolle nach Anspruch 2, **dadurch gekennzeichnet, dass** das Auflager (31) vom flach ausgebildeten Rand der Aufnahmeöffnung der Rollen-Stiftaufnahme (30) nach Art einer Einlauffase konisch nach innen unten verlaufend ausgebildet ist.

4. Rolle nach einem der vorhergehenden Ansprüche, **dadurch gekennzeichnet, dass** sich oben an die erste Materialverdickung (23, 23') ein zylindrisch ausgebildeter Beabstandungsbund (24, 24') mit gleichem oder größeren Außendurchmesser als das obere Ende der ersten Materialverdickung (23, 23') anschließt.

5. Rolle nach Anspruch 4, **dadurch gekennzeichnet,**
- **dass** in einem vertikalen Abstand von der Oberseite des sich an die erste Materialverdickung (23, 23') anschließenden Beabstandungsbundes (24, 24') eine sich nach unten bis auf diese Oberseite nach Art eines Bundes oder mehrerer unmittelbar oder stufenförmig voneinander abgesetzt aufeinander folgender Bunde bis auf einen geringeren Außendurchmesser als der des Beabstandungsbundes (24, 24') erweiternde zweite Materialverdickung (25, 25') ausgebildet ist und
- **dass** vom flach ausgebildeten Rand der Aufnahmeöffnung der Stiftaufnahme des Rollen-Objekts oder der daran angeordneten losen Objekt-Stifthülse (40) eine Art Schulter (43, 43') mit an die Kontur dieser zweiten Materialverdickung (25, 25') angepasst komplementärer Ausgestaltung ausgebildet ist.

6. Rolle nach Anspruch 5, **dadurch gekennzeichnet, dass** die zweite Materialerweiterung (25, 25') sich konisch nach unten erweitert.

7. Rolle nach Anspruch 6, **dadurch gekennzeichnet, dass** die zweite Materialerweiterung (25, 25') zumindest steiler als die erste Materialerweiterung (23, 23') ausgebildet ist.

8. Rolle nach einem der vorhergehenden Ansprüche, **dadurch gekennzeichnet, dass** die für die Aufnahme des oberen Stiftteils (22, 22') vorgesehene Objekt-Stifthülse (40, 40') aus Kunststoff besteht, wobei der Rand um ihre Stift-Aufnahmeöffnung zu einem Öffnungsrandflansch (42, 42') verbreitert ist.

9. Rolle nach Anspruch 8, **dadurch gekennzeichnet, dass** im Öffnungsrandflansch der Objekt-Stifthülse (40') eine zentrische Vertiefung (44') zum zumindest teilweisen Eintauchen des Beabstandungsbundes (24') ausgebildet ist.

10. Rolle nach einem der vorhergehenden Ansprüche, **dadurch gekennzeichnet, dass** an der Innenwandung der Rollen-Stiftaufnahme (30) wulst- oder warzenartige Materialverdickungen ausgebildet sind, die bei darin eingedrücktem Befestigungsstift (20, 20') in eine an seinem unteren Stiftteil (21, 21') entsprechend positioniert ausgebildete Nut (27, 27') eingreifen.

11. Rolle nach Anspruch 8, **dadurch gekennzeichnet, dass** auch in einem oberen Abschnitt der Innenwandung der Objekt-Stifthülse (40) wulst- oder warzenartige Materialverdickungen (45) ausgebildet sind, die bei darin eingedrücktem Befestigungsstift (20, 20') in eine am oberen Stiftteil (22, 22') entsprechend positioniert ausgebildete Nut (26, 26') eingreifen.

12. Rolle nach einem der vorhergehenden Ansprüche, **dadurch gekennzeichnet, dass** zumindest sich die erste Materialverdickung mit konvex oder konkav gewölbter Kontur erweitert und daran angepasst entsprechend komplementär das zugehörige Auflager am Rollenhals ausgebildet ist.

13. Rolle nach Anspruch 12, **dadurch gekennzeichnet, dass** sich auch die zweite Materialverdickung mit konvex oder konkav gewölbter Kontur erweitert und daran angepasst entsprechend komplementär die zugehörige Schulter an der Objekt-Stifthülse ausgebildet ist.

14. Rolle nach einem der vorhergehenden Ansprüche, **dadurch gekennzeichnet, dass** entweder die sich erweiternden Materialverdickungen keine geschlossen umlaufend ausgebildete Mantelfläche aufweisen, sondern durch spalt- oder schlitzartige, vertikal verlaufend ausgebildete Zwischenräume in zumindest lamellenartige Abschnitte unterteilt sind, oder die Auflagefläche des zugehörigen Auflagers bzw. der zugehörigen Schulter durch rillenförmige Vertiefungen oder rippenförmige Erhöhungen eine geriffelte Oberflächenstruktur aufweisen.

## Claims

1. A caster, especially a furniture caster, comprising at least one castor mounting portion (13) having mounted in it or on it at least one wheel or twin wheels (11, 12) each supported on an end of an axle (10) seated in said portion, and a caster pin socket (30) disposed in said portion at a horizontal distance from wheel axle (10) and consisting of a plastics material or, if caster mounting portion (13) is made of a plastics material, a hollow cylindrical such socket (30) in the form of a sleeve and closed at its bottom end, said caster pin socket intended to accommodate a bottom pin section (21, 21') of a metal caster fastening pin (20, 20') of which a top pin section (22, 22') is intended to be disposed vertically in an object pin socket also hollow cylindrical and configured to form a sleeve closed at its top end or in a loose object pin sleeve (40, 40') introduced in a blind bore in a caster object, **characterized in that**
- fastening pin (20, 20') has formed thereon in a middle pin portion corresponding to the opening region of caster pin socket (30) at least a first expanding increased-diameter portion (23, 23') stepped towards the top pin end in the manner of a flange or of a plurality of successive shouldered flanges, **in that**
- said first increased-diameter portion (23, 23') forms a support, slip and guide bearing for bottom pin section (21, 21') of fastening pin (20, 20') introduced in caster pin socket (30), and **in that**
- there is formed in the marginal area of the entry opening of caster pin socket (30) a bearing (31) for said first increased-diameter portion (23, 23'), said bearing configured to be complementary in shape to said increased-diameter portion (23, 23').

2. Caster as claimed in claim 1, **characterized in that** first increased-diameter portion (23, 23') expands conically outwardly towards the top.

3. Caster as claimed in claim 2, **characterized in that** bearing (31) is formed by the flat edge of the entry opening of caster pin socket (30) and extending conically in- and downwardly in the manner of an entry chamfer.

4. Caster as claimed in any one of the preceding claims, **characterized in that** first increased-diameter portion (23, 23') is followed at the top thereof by a cylindrically shaped spacer collar (24, 24') having an outer diameter equal to, or greater than, the top end of said first increased-diameter portion (23, 23').

5. Caster as claimed in claim 4, **characterized in that**
- a second expanding increased-material portion (25, 25') is formed at a vertial distance from the top surface of said spacer collar (24, 24') adjoining first increased-diameter portion (23, 23'), said second increased-diameter portion extending downwardly to said top surface in the manner of a flange, or of several flanges following each other directly or in a stepped fashion, down to an outer diameter smaller than that of the spacer collar (24, 24'), and **in that**
- a kind of shoulder (43, 43') is formed from the flat edge of entry opening of the pin socket of the caster object or from the loose object pin sleeve (40) placed thereon, said shoulder (43, 43') complementary in shape to the countours of said second increased-diameter portion (25, 25').

6. Caster as claimed in claim 5, **characterized in that** second increased-diameter portion (25, 25') expands conically downwardly.

7. Caster as claimed in claim 6, **characterized in that** second increased-diameter portion (25, 25') is formed to be at least steeper than first increased-diameter portion (23, 23').

8. Caster as claimed in any one of the preceding claims, **characterized in that** the object pin sleeve (40, 40') intended for accommodating top pin section (22, 22') consists of a plastics material, with the rim about its pin entry opening widened to form an opening rim flange (42, 42').

9. Caster as claimed in claim 8, **characterized in that** in the opening rim flange of the object pin sleeve (40') a centered recess (44') is formed for at least partly accommodating spacer collar (24').

10. Caster as claimed in any one of the preceding claims, **characterized in that** bead- or wart-like thickened material protrusions are formed on the inner wall of caster pin socket (30), said thickened material protrusions engaging a correspondingly positioned groove (27, 27') formed in its bottom pin section (21, 21') when fastening pin (20, 20') is pressed into said socket.

11. Caster as claimed in claim 8, **characterized in that** bead-or wart-like thickened material protrusions (45) are formed in a top section of the inner walls of object pin sleeve (40) as well, said thickened material protrusions engaging a correspondingly positioned groove (26, 26') formed in its top pin section (22, 22') when fastening pin (20, 20') is pressed into said socket.

12. Caster as claimed in any one of the preceding claims, **characterized in that** at least said first increased-diameter portion is expanded with convexly or concavely curved contours and **in that** the associated bearing on the caster stem is formed to be correspondingly complementary therewith to match.

13. Caster as claimed in claim 12, **characterized in that** said second increased-diameter portion, too, is expanded with convexly or concavely curved contours and **in that** the associated shoulder on the object pin sleeve is formed to be correspondingly complementary therewith to match.

14. Caster as claimed in any one of the preceding claims, **characterized in that** either the expanding increased-diameter portions do not have a completely closed or annular peripheral surface but are divided by vertically extending gap- or slit-like interstices to form at least lamella-like sections, or the bearing surface of the associated bearing or of the associated shoulder has a serrated surface texture formed by groove-like recesses or rib-like crests.

## Revendications

1. Roulette, notamment roulette pour meubles, équipée au moins d'un élément de logement (13) pour la roulette avec au moins une roue de roulement, placée dans ou à côté de cet élément, ou avec deux roues de roulement (11, 12), placées de part et d'autre de cet élément, aux extrémités d'un axe porteur (10), et avec un logement de réception (30) en matière plastique pour une tige, intégré à une distance horizontale par rapport à l'axe porteur dans l'élément de logement (13), ou, lorsque l'élément de logement (13) est en matière plastique, avec un élément de réception (30) pour la tige placé à côté de l'élément de logement (13), respectivement sous forme d'un cylindre creux comme une douille fermée en bas, le logement de réception (30) pour la tige étant destiné à recevoir une partie inférieure (21, 21') d'une tige de fixation métallique (20, 20') d'une roulette dont une partie supérieure (22, 22') est destinée à être placée verticalement dans un élément de logement pour une tige qui est intégré à cet effet dans un objet destiné à être équipé des roulettes, également sous forme d'un cylindre creux comme une douille fermée en haut, ou dans une douille amovible (40, 40') logée dans ledit objet, dans un trou borgne,
**caractérisée en ce**
- **qu'**au moins une première surépaisseur de matériau (23, 23') est formée dans une section du milieu de la tige de fixation (20, 20') de la roulette, correspondant au champ d'ouverture de l'élément de réception de la tige (30), qui s'élargit vers l'extrémité supérieure de la tige, comme une ou plusieurs brides qui se succèdent directement ou de façon étagée en forme de gradins,
- **que** la première surépaisseur de matériau (23, 23') forme un palier support, glisseur et un palier-guide pour la partie inférieure (21, 21') de la tige de fixation (20, 20) enfichée dans le logement de la tige (30) de la roulette et
- **qu'**au champ du bord de l'ouverture de réception de l'élément de réception de la tige (30) de la roulette pour cette première surépaisseur de matériau (23, 23') un appui (31) de forme complémentaire adaptée au contour de cette surépaisseur de matériau (23, 23') est formé.

2. Roulette selon la revendication 1, **caractérisée en ce que** la première surépaisseur de matériau (23, 23') s'élargit coniquement vers le haut.

3. Roulette selon la revendication 2, **caractérisée en ce que** l'appui (31) présente une forme conique comme un chanfrein d'entrée allant du bord plat de l'ouverture de réception de la tige (30) de la roulette vers l'intérieur respectivement vers le bas.

4. Roulette selon une des revendications précédentes, **caractérisée en ce que** la première surépaisseur de matériau (23, 23') est rejoint en haut par une bride d'écartement de forme cylindrique (24, 24') d'un diamètre extérieur égal ou plus grand que l'extrémité supérieure de la première surépaisseur de matériau (23, 23').

5. Roulette selon la revendication 4, caractériseé en ce
- qu'une deuxième surépaisseur (25, 25') qui s'élargit vers le bas, comme une ou plusieurs brides qui se succèdent directement ou de façon étagée en forme de gradins, jusqu'à un diamètre extérieur inférieur au diamètre de la bride d'écartement (24, 24'), est formée dans une distance verticale de la face supérieure sur la bride d'écartement (24, 24') raccordée à la première surépaisseur (23, 23') et
- qu'une sorte d'épaulement (43, 43') de forme complémentaire adaptée au contour de cette deuxième surépaisseur de matériau (25, 25') est formé au bord plat de l'ouverture de l'élément de réception de la tige de ledit objet ou de la douille amovible (40) y placée à côté.

6. Roulette selon la revendication 5, **caractérisée en ce que** la deuxième surépaisseur de matériau (25, 25') s'élargit coniquement vers le bas.

7. Roulette selon la revendication 6, **caractérisée en ce que** la deuxième surépaisseur de matériau (25, 25') présente tout au moins un bord extérieur incliné plus fortement que la première surépaisseur de matériau (23, 23').

8. Roulette selon une des revendications précédentes, **caractérisée en ce que** la douille (40, 40') de ledit objet, étant destinée à recevoir la partie supérieure de la tige (22, 22'), est en matière plastique, le bord de l'ouverture du logement de la tige étant élargie et formant une collerette de bord (42, 42').

9. Roulette selon la revendication 8, **caractérisée en ce qu'**un creux central (44') permettant une introduction tout au moins partielle de la bride d'écartement (24') est formé dans la collerette de bord de la douille (40') de ledit objet.

10. Roulette selon une des revendications précédentes, **caractérisée en ce que** la paroi intérieure du logement de réception de la tige (30) de la roulette présente des surépaisseurs de matériau sous forme de boudins ou boutons qui s'encrènent dans une rainure (27, 27') positionnée à cet effet dans la partie inférieure de la tige (21, 21'), lorsque la tige de fixation (20, 20') est introduite dans le logement de réception.

11. Roulette selon la revendication 8, **caractérisée en ce qu'**une section supérieure de la paroi intérieure la douillle (40) de ledit objet présente également des surépaisseurs de matériau sous forme de boudins ou boutons (45) qui s'encrènent dans une rainure (26, 26') positionnée à cet effet dans la partie supérieure de la tige (22, 22'), lorsque la tige de fixation (20, 20') est introduite dans la douille.

12. Roulette selon une des revendications précédentes, **caractérisée en ce qu'**au moins la première surépaisseur de matériau s'élargit en formant un contour incurvé convexe ou concave, avec l'appui associé correspondant adapté de forme complémentaire sur l'élément de réception de la tige de la roulette.

13. Roulette selon la revendication 12, **caractérisée en ce que** la deuxième surépaisseur de matériau s'élargit également en formant un contour incurvé convexe ou concave, avec l'épaulement correspondant adapté de forme complémentaire sur la douille de ledit objet.

14. Roulette selon une des revendications précédentes, **caractérisée en ce que** les surépaisseurs s'élargissantes ne présentent pas une enveloppe avec un pourtour fermé continu, mais qu'ils sont divisés dans des sections tout au moins lamellées par des espaces intermédiaires verticaux en forme de fentes ou de rainures ou que la surface de l'appui ou de l'épaulement correspondant présente une structure cannelée avec des d'évidements en forme de gorges ou des bosses en forme de nervures.
